# EUROPEAN PATENT APPLICATION

(11) **EP 1 262 130 A1**
(43) Date of publication of application: **04.12.2002**
(21) Application number: 02252920.0
(22) Date of filing: 25.04.2002
(51) Int. Cl.: A47J 37/06, A47J 37/07

(54) **Small electric oven**

(30) Priority: 01.06.2001 US 872521
(71) Applicant: Theresa International Limited, New Territories, Hong Kong (CN)
(72) Inventor: Chi Cheong, Hui, Theresa Int. Ltd., Room 1612, Shatin, New Territories, Hong Kong (CN)
(74) Representative: Godwin, Edgar James

(57) **Abstract**

A small oven has a removable corrugated bottom platen (16). Bases of grooves formed by the corrugations slope towards one end of the platen when the platen is supported in the oven for use. As a result hot fat and other juices released during cooking drain off the platen making the platen less prone to contamination caused by burnt-on fat and therefore the platen easier to keep clean. The platen may have a planar cooking surface, in which case the platen is supported in the oven with the planar surface sloping towards the one end.

## Description

### Field of the invention

The invention relates to small electric ovens.

### Background of the Invention

So-called "small" ovens are portable and designed to rest on a work surface in use and be put away in a kitchen storage cupboard, say, when not in use. Nevertheless such ovens are capable of cooking joints of beef, a medium sized chicken and similar items, as well as baking cakes and pies, and toasting sandwiches.

As the ovens are heated by electric elements and contain electrical (electronic) components and electrical plugs or sockets, it is difficult to clean the cooking surfaces because the oven cannot be submerged in water or even liberally wetted, without causing a risk of damage to the electrical parts. The cooking surfaces tend to become "contaminated" because moisture and fat evaporates from and burns onto the cooking surfaces in use.

### Summary of the Invention

It is an object of the invention to overcome or ameliorate the above-mentioned problems or at least to provide the public with a useful alternative.

According to the invention there is provided a small electric oven including a base unit and a lid unit that fits over the base unit to close the oven, a first cooking platen supported by the base unit and a second cooking platen supported inside the lid unit, and electric heating elements for each of the platens, in which the first cooking platen is mounted in the base unit such that any liquid on the platen drains in use towards one end of the platen.

Preferably, the first cooking platen may have a corrugated surface interspaced with grooves extending towards the one end and the grooves sloping down towards the one.

Preferably, the first platen preferably may have an aperture adjacent said one end through which liquid can pass into a collecting tray.

Preferably, the collecting tray may be slidingly mounted in the base unit and removable therefrom.

Preferably, a separate thermostat may be provided for each platen.

Further aspects of the invention will become apparent from the following description, which is give by way of example only.

### Brief Description of the Drawings

Small electric ovens according to the invention will now be described by way of example with reference to the accompanying drawings in which:
Figure 1 is an isometric exterior view of the oven,
Figure 2 is a sectional side view of the oven with a fixed bottom platen,
Figure 3 is exploded view of an oven similar to the oven of Figure 2 with a removable bottom platen, and
Figure 4 is a sectional side view of a similar oven with a different form of bottom platen.

### Description of the Preferred Embodiment

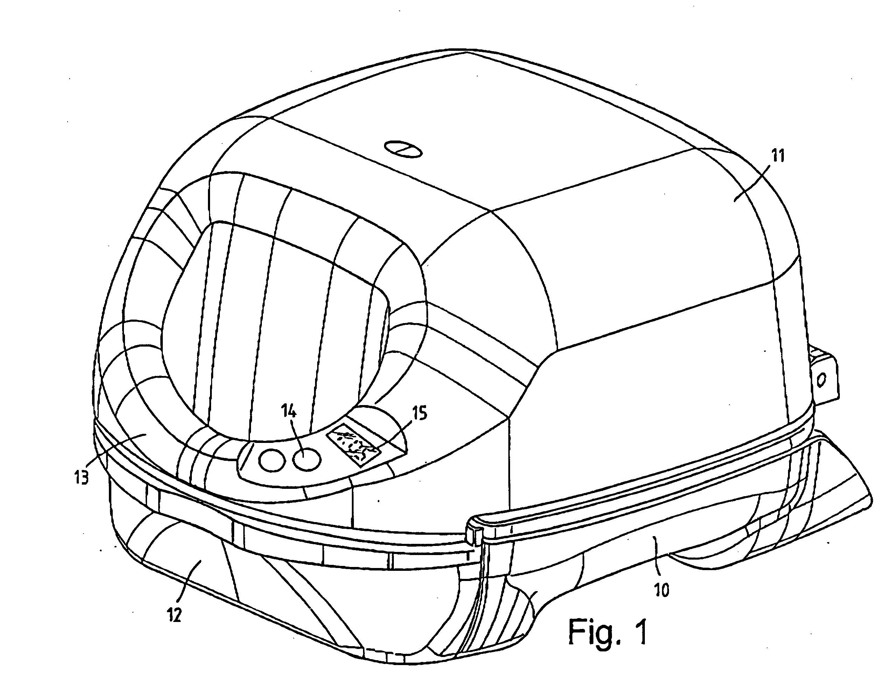

Referring to the drawings, in Figure 1 the oven has a base unit 10 and a lid unit 11 that is hinged to the base unit and arranged to close over the base unit. A collection tray 12 slidingly fits into the base unit 10 and a lifting handle 13 is integrally molded with the lid unit. Control buttons 14 and a digital timer 15 are carried in the handle 13.

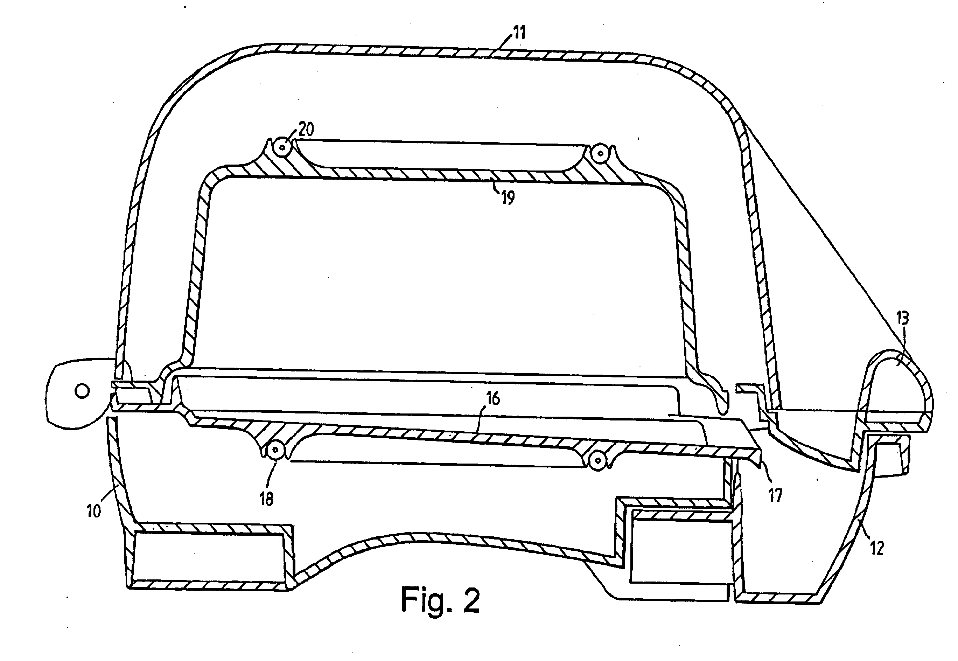

In Figure 2, a fixed corrugated bottom platen 16 is mounted so that grooves of the corrugation slope down towards one end of the platen, where a pouring lip 17 is integrally formed above an open top of the collection tray 12. An electrical heating element 18 is mounted in intimate physical contact with the platen 16. A top planar platen 19 is mounted in the lid unit 11 and has heating element 20.

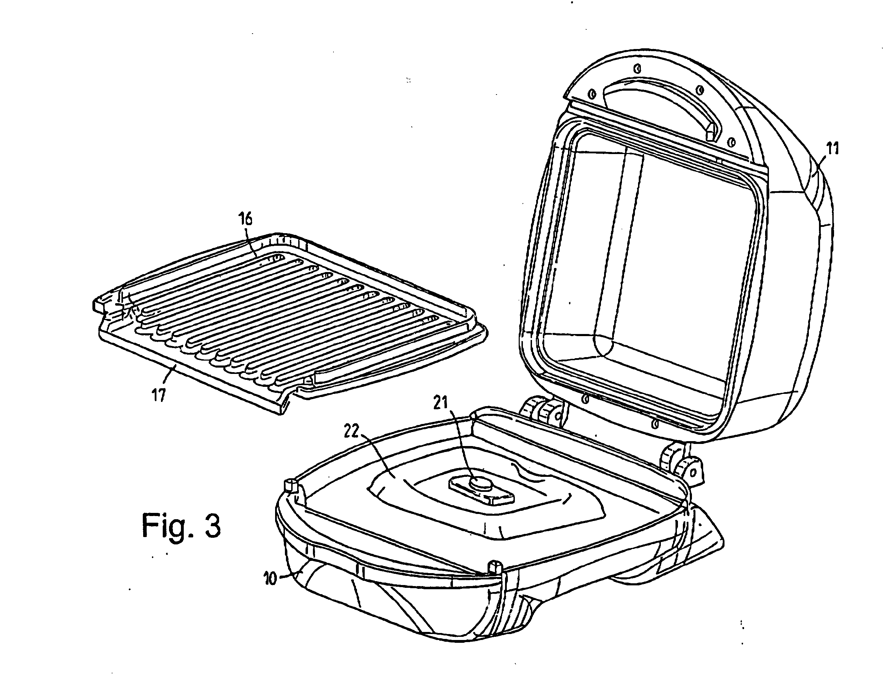

In Figure 3, the oven has removable platen 16 (having the same configuration as the platen 16 in Figure 2) Exposed in the base unit is a thermostat 21 and an enclosed electric heating element 22 is provided. The platen base is formed with a "foot print" that fits over the enclosed element as described in USA Patent application No 09/756,367, filed on 8 January 2001.

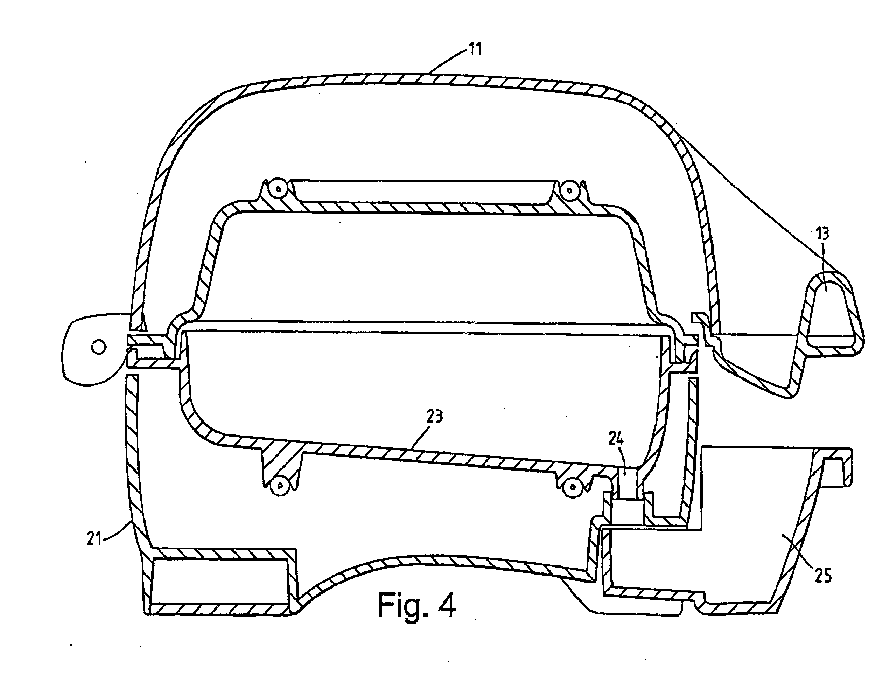

In Figure 4, a base unit 23, having a planar base, is deeper than the platen units 16 in Figures 2 and 3. The base unit 23 is mounted with its base sloping towards one end. Adjacent the one end of the platen an aperture 24 is formed to allow fluids to drain into a collection tray 23. In an alternative arrangement, the platen 23 can be mounted with its base horizontal and formed with corrugations. In that case, bottoms of the grooves formed by the corrugations slope down towards the one end, in same manner as the grooves in the platen 16. Fat therefore drains towards the aperture 24 during use.

It is well known in the art to have a manually settable control unit for a small oven, that can turn electric power ON and OFF automatically as required, and to respond to operations of thermostats, such as thermostat 21, placed in the oven. Such components and control functions are therefore not described in detail and not all shown in the Figures.

Embodiments of the invention however provide ovens with either a sloping planar based platen, or a platen with sloping grooves in a corrugated array. (The platen may also be removable as shown in Figure 3 for ease of cleaning.) The sloping of the platen or the sloping grooves ensures that liquids, including hot fat, drain away from foodstuff during cooking for collection in the trays 12 or 25 during use of the oven. The collected liquid or solidified fat can be readily removed by sliding out the trays 12 or 25 after cooking is completed, and the trays emptied and cleaning out. Because the moisture and fat is continually drained away, the cooking conditions are much improved. Further, the fat or other juices released during cooking are less prone stain or to "burn" onto the surfaces of the platen and so the platen remains serviceable longer and is easier to keep clean.

## Claims

1. A small electric oven including a base unit and a lid unit that fits over the base unit to close the oven, a first cooking platen supported by the base unit and a second cooking platen supported inside the lid unit, and electric heating elements for each of the platens, in which the first cooking platen is mounted in the base unit such that any liquid on the platen drains in use towards one end of the platen.

2. A small electric oven according to claim 1 in which the first cooking platen has a corrugated surface interspaced with grooves extending towards the one end and the grooves sloping down towards the one end.

3. A small electric oven according to claim 1 or 2 in which the first platen has an aperture adjacent said one end through which liquid can pass into a collecting tray.

4. A small electric oven according to any one of claims 1 to 3 in which the collecting tray is slidingly mounted in the base unit and removable therefrom.

5. A small electric oven according to any one of claims 1 to 4 including a separate thermostat for each platen.
